# EUROPEAN PATENT APPLICATION

(11) **EP 4 691 970 A1**
(43) Date of publication of application: **11.02.2026**
(21) Application number: 24193951.1
(22) Date of filing: 09.08.2024
(51) Int. Cl.: C01B 3/04, B01J 19/00, C01B 3/38

(54) **PROCESS FOR PRODUCING A HYDROGEN PRODUCT**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Lutz, Michael, 60439 Frankfurt am Main (DE); Vicari, Lorenzo, 60439 Frankfurt am Main (DE); Ulber, Dieter, 60439 Frankfurt am Main (DE)
(74) Representative: Air Liquide

(57) **Abstract**

The invention relates to a process for producing a hydrogen product (3) from a feedstock stream (4), said process comprising the following steps:
- providing an ammonia stream (8);
- sending the ammonia stream (8) to a vaporizer (6) configured to receive said ammonia stream (8) and to vaporize said ammonia stream (8) so as to obtain a vaporized ammonia stream (10); and
- controlling the temperature of the vaporized ammonia stream (10) by injecting a cooling medium (16) into the vaporized ammonia stream (10) thereby obtaining a temperature-controlled ammonia stream (18).

## Description

The present invention relates to a process and an installation for producing a hydrogen product from a feedstock stream.

In an effort to reduce the effects of carbon dioxide emissions, new energy carriers are becoming increasingly more important. One of the leading energy carriers is hydrogen; however, due to its small molecular size, high-pressure requirements, and very low boiling point, transportation of elemental hydrogen is difficult and costly.

Ammonia (NH3) has raised some attention in the literature, since existing infrastructure can be used for storage and transportation (e.g., LPG infrastructure). As such, production of hydrogen using ammonia, instead of natural gas, is foreseen to be the future of the next generation of hydrogen production. Unfortunately, new industrial facilities are quite costly to build and take many years to design and produce. Therefore, it will likely be at least a decade or more before any new dedicated ammonia cracking facilities can be operational. In the interim, it is still desirable to proceed with production of hydrogen in a more environmentally sensitive manner, which includes the cracking of ammonia gas by using existing hydrogen production facilities.

Ammonia can be cracked into hydrogen and nitrogen at ambient pressure and moderate temperatures (at a range comprised between 450 and 600°C) by thermal cracking and/or in the presence of a catalyst. In order to save hydrogen compression energy on the backend, it can be advantageous to apply higher pressures for the ammonia cracking reaction (it is easier to compress ammonia gas compared to hydrogen gas due to hydrogen's small molecular size). However, at higher pressures, the cracking reaction is not favored according to Le Chatelier's principle, so higher temperatures are favored (around 700°C) in order to reach economic conversion rates.

Unfortunately, ammonia is known to lead to nitride formation (nitridation) in steels forming ducts and catalyst tubes configured to receive ammonia during the process of NH3 cracking into H2 and N2, particularly so at elevated temperatures. This is because the ammonia cracking reaction at elevated temperature will lead to formation of atomic nitrogen, which diffuses into the metallic material to form nitrides, thereby causing the embrittlement of steels.

As some steels also act as catalysts for the NH3 cracking process, nitride formation of steel can occur already at its surface and at temperatures where only small ammonia conversion rates are observed. That means steels might already be at risk of embrittlement during heat up of ammonia to above 400°C.

Currently, steam methane reformers (SMRs) are operated with hydrocarbon feedstock, such as natural gas, LPG, naphtha, refinery off gas or the like, at temperatures well above 700°C. Although natural gas typically contains nitrogen, this molecular nitrogen does not lead to critical nitride formation in steels from the process (tube) side, as the partial pressure of nitrogen is not high enough and catalysts to split N2 into atomic nitrogen are not present. As such, existing SMRs are not designed with this contingency in mind.

Current materials applied in the feed pretreatment and preheating section of an SMR plant are carbon steel (CS), nickel-chromium based austenitic steels, chromium-molybdenum low alloy steels (CrMo), and stainless steel (SS). The typical preheating temperatures of ammonia in order to optimize the ammonia conversion are in the range of 500 - 650 °C. In short, of the applied steels, especially iron, but also important alloying elements like chromium, can easily form nitrides. Furthermore, the majority of process equipment in a syngas generation unit is operated well above 400 °C. Specifically, the hot flue gas section of tubes and coils of an ammonia cracking reactor suffer from the nitridation resulting from the cracking reaction at this high temperature range. Therefore, it is not feasible to simply switch the feedstock from hydrocarbons to ammonia for an existing hydrogen production facility.

As such, there is a need in the art to overcome at least some of these drawbacks.

For this purpose, the invention proposes a process for producing a hydrogen product from a feedstock stream, said process comprising the following steps:
- providing an ammonia stream;
- sending the ammonia stream to a vaporizer configured to receive said ammonia stream and to vaporize said ammonia stream so as to obtain a vaporized ammonia stream; and
- controlling the temperature of the vaporized ammonia stream by injecting a cooling medium into the vaporized ammonia stream thereby obtaining a temperature-controlled ammonia stream.

Thanks to the invention, the temperature of the vaporized ammonia stream can be controlled so as to avoid the overheating of a downstream equipment that might be sensitive to ammonia, above a certain temperature.

In one embodiment, the process further comprises the following steps of:
- directing the temperature-controlled ammonia stream as said feedstock stream to a gas conversion unit to perform a gas conversion for producing said hydrogen product; and/or
- directing the temperature-controlled ammonia stream as a fuel stream to a fired equipment. The feedstock stream in the present disclosure is understood as a feedstock stream to be converted by said gas conversion.

In one embodiment, the process comprises performing a combustion of the fuel stream with the fired equipment to bring a heat input to the process, thereby producing a flue gas stream.

In one embodiment, said combustion is performed to provide heat to the gas conversion. Preferably, said gas conversion is an endothermic gas conversion.

In one aspect of the invention, the ammonia stream is provided in a liquid form, typically at a temperature around -33°C and particularly from the battery limit.

In one embodiment, the process comprises:
- providing said ammonia stream in a liquid form with a feed pump and sending the provided ammonia stream to said vaporizer.

In one aspect of the invention, the feedstock stream comprises ammonia and/or a hydrocarbon.

In one embodiment, the hydrogen product comprises a cracked gas stream and/or a synthesis gas stream.

In one embodiment, the gas conversion comprises a cracking reaction of ammonia and produces a cracked gas stream as said hydrogen product.

In one embodiment, the gas conversion comprises a reforming reaction of a hydrocarbon and produces a synthesis gas stream as said hydrogen product.

In one embodiment, the process comprises a step of recovering hydrogen from the hydrogen product, for example by pressure or temperature swing adsorption, and/or by partial condensation. A pure hydrogen stream comprising more than 90 mol%, preferably more than 95 mol%, preferably more than 99 mol% hydrogen may thereby be obtained.

In one embodiment, the cooling medium comprises ammonia, in particular liquid ammonia.

Preferably, said liquid ammonia can be supplied from said ammonia stream provided in a liquid form. This is advantageous in that the temperature control of the feedstock stream is carried out using the cooling medium comprising ammonia, in particular liquid ammonia, for which an installation is already tailored. Moreover, the use of the cooling medium comprising ammonia is compatible with the gas conversion unit, whose conversion efficiency decreases with a water content in the vaporized ammonia stream.

In one embodiment, the cooling medium comprises gaseous ammonia. This is particularly relevant when only a minor variation of the temperature of the ammonia stream is desired.

In one embodiment, the cooling medium comprises water.

In one embodiment, the process comprises:
- supplying the cooling medium through a supply duct and injecting the supplied cooling medium into the vaporized ammonia stream.

In one embodiment, the process comprises:
- controlling a flow rate of the cooling medium via a control valve when the temperature of the temperature-controlled ammonia stream is above or below a predetermined temperature threshold.

In one embodiment, the process comprises:
- keeping the cooling medium in a supply duct in a liquid state by increasing a pressure of the cooling medium supplied to the supply duct, in particular by increasing a discharge pressure of a supply pump connected to the supply duct to provide said cooling medium to the supply duct.

In one embodiment, the process comprises:
- superheating the vaporized ammonia stream so as to obtain a superheated ammonia gas; and
- controlling the temperature of the vaporized ammonia stream by injecting said cooling medium into the superheated ammonia gas, thereby obtaining the temperature-controlled ammonia stream.

In one embodiment, the process comprises superheating the temperature-controlled ammonia stream, thereby obtaining a superheated ammonia stream.

In one embodiment, the process comprises superheating the temperature-controlled ammonia stream by recovering waste heat from said flue gas stream.

In one embodiment, the process comprises converting partially the temperature-controlled ammonia stream, or the superheated ammonia stream in order to provide a partially converted ammonia stream to the gas conversion unit as a cracking reactor and/or to a fired equipment.

In one embodiment, the process comprises the following steps of:
- measuring the temperature of the temperature-controlled ammonia stream;
- comparing said measured temperature with a predetermined temperature threshold; and
- increasing the flow rate of the cooling medium if the measured temperature is higher than the predetermined temperature threshold.

In one embodiment, the process comprises the following steps of:
- measuring the temperature of the temperature-controlled ammonia stream;
- comparing said measured temperature with a predetermined temperature threshold; and
- decreasing the flow rate of the cooling medium, if the measured temperature is lower than the predetermined temperature threshold.

The invention also relates to an installation for producing a hydrogen product from a feedstock stream, said installation comprising:
- a vaporizer configured to receive an ammonia stream and to vaporize said ammonia stream so as to obtain a vaporized ammonia stream;
- a gas conversion unit for the conversion of said feedstock stream; and
- an ammonia stream temperature control device comprising at least one injector arranged for injecting a cooling medium in the vaporized ammonia stream to obtain a temperature-controlled ammonia stream.

Thus, the invention allows to efficiently protect the installation while not changing the current industrial process allowing to produce the hydrogen product.

In one embodiment, the installation comprises a fired equipment.

In one embodiment, the installation comprises a flue gas duct arranged to discharge a flue gas stream from the fired equipment. The flue gas duct may be arranged as a flue gas tunnel.

In one embodiment, the installation comprises an ammonia circulation line which connects the vaporizer with:
- the gas conversion unit to provide the temperature-controlled ammonia stream to the gas conversion unit as said feedstock stream; and/or
- the fired equipment to provide the temperature-controlled ammonia stream as a fuel stream to said fired equipment.

The injector is advantageously arranged for injecting said cooling medium in the ammonia circulation line.

In one embodiment, the installation comprises a feed pump configured to supply an ammonia stream, in particular a liquid ammonia stream, to the vaporizer. The feed pump allows to increase the pressure of the ammonia stream from the battery limit to a target process pressure.

Advantageously, the feed pump is arranged to be supplied by a liquid ammonia stream from the battery limit.

In one embodiment, the installation comprises a feed duct arranged to provide said ammonia stream. The feed pump may be connected to the feed duct to pump ammonia into the feed duct.

In one embodiment, the ammonia stream temperature control device comprises a supply duct connected to the injector to supply a cooling medium to the injector.

In one embodiment, the supply duct is configured to be cooled by forced convection, in particular by convection with cooled air.

In one embodiment, the supply duct is cold-insulated.

In one embodiment, the injector, in particular the injection point of said injector, is configured to be cooled with water.

In one embodiment, the temperature control device comprises a supply pump connected to the supply duct to provide a cooling medium to the supply duct.

These features prevent the cooling medium supplied to the injector from evaporating by surrounding ambient heat near to the injector, in particular near to the injection point of the injector, which is thermally connected to the ammonia circulation line which is a hot process piping, or prevent from evaporating by undergoing a pressure drop within said supply duct.

In one embodiment, the gas conversion unit comprises a gas conversion reactor configured for the conversion of said feedstock stream. For example, the gas conversion reactor may be a cracking reactor arranged for cracking ammonia as said feedstock. In another example, the gas conversion reactor may be a reformer arranged for the reforming of hydrocarbons as said feedstock.

In one embodiment, the fired equipment comprises at least one furnace arranged in a thermal communication with the gas conversion reactor to provide heat to the gas conversion reactor. The furnace may comprise at least a combustion zone in which a combustion of a fuel stream may be performed. The furnace comprises in particular at least one burner arranged to combust the fuel stream in the combustion zone in order to provide heat to the gas conversion unit, and thereby producing a flue gas. The flue gas duct is in particular connected to the furnace to discharge a flue gas stream from the combustion zone.

The burner is in particular connected to a fuel stream inlet.

In the present disclosure, the "heat input to the process" may for example be a heat input to the gas conversion unit.

In one embodiment, the installation comprises at least one ammonia stream superheater arranged to superheat the temperature-controlled ammonia stream, thereby obtaining a superheated ammonia stream.

As a result of the temperature of the vaporized ammonia stream being controlled, the heat exchanger of a superheater can be efficiently protected against overheating and damage thanks to the ammonia stream temperature control device.

In one embodiment, the ammonia stream superheater comprises a heat exchanger comprising at least one coil and/or at least one tube configured to be heated by a heating medium.

In one embodiment, the heat exchanger of the at least one ammonia stream superheater is arranged in said flue gas duct.

In one embodiment, the ammonia circulation line comprises the at least one ammonia stream superheater.

Advantageously, said at least one ammonia stream superheater forms a waste heat recovery system configured to recover heat from said flue gas stream.

In one embodiment, the installation comprises:
- at least two ammonia stream superheaters arranged to superheat the vaporized ammonia stream; and
wherein the injector of the ammonia stream temperature control device is arranged for injecting a cooling medium in the vaporized ammonia stream upstream of one of the ammonia stream superheaters and downstream of another of the ammonia stream superheaters.

In one embodiment, the installation comprises:
- an ammonia vapor superheater arranged to superheat said vaporized ammonia stream so as to obtain a superheated ammonia gas; and
the injector is arranged for injecting said cooling medium into the superheated ammonia gas to obtain said temperature-controlled ammonia stream.

In one embodiment, the installation comprises:
- at least one cracking unit arranged to partially convert the temperature-controlled ammonia stream, or the superheated ammonia stream, in order to provide a partially converted ammonia stream to the gas conversion unit and/or to the fired equipment.

In one embodiment, the ammonia circulation line comprises the at least one cracking unit.

In the embodiment wherein the ammonia circulation line is connecting the vaporizer with the gas conversion unit, the cracking unit may be a pre-cracking reactor configured to obtain a partially converted ammonia stream.

In one embodiment, the ammonia circulation line comprises a pre-cracked ammonia superheater arranged for superheating the pre-cracked ammonia stream before routing the pre-cracked ammonia stream to the gas conversion unit.

In the embodiment wherein the ammonia circulation line is connecting the vaporizer with the fired equipment, the cracking unit may be a fuel cracker.

In one embodiment, the cracking unit is arranged downstream of the one or more ammonia stream superheater.

In one embodiment, the cracking unit is an adiabatic cracking reactor.

Alternatively, the cracking unit is a gas heated cracking unit (GHC).

In one embodiment, the gas heated cracking unit (GHC) is configured to be heated by a heating medium.

The heating medium may comprise steam, and/or a flue gas stream from a fired equipment. In this case, the pre-cracking reactor does not necessarily require an ammonia stream superheater upstream of said pre-cracking reactor.

In one embodiment, the gas heated cracking unit (GHC) comprises a shell- and-tube heat exchanger.

Alternatively, the gas heated cracking unit (GHC) comprises a heat exchanger comprising at least one coil and/or at least one tube configured to be heated by a heating medium, said coil and/or tube being filled with at least one catalyst.

In one embodiment, the heat exchanger of the gas heated cracking unit is arranged in said flue gas duct. Said gas heated cracking unit advantageously forms a waste heat recovery system configured to recover the heat from the flue gas stream.

In one embodiment, the injector comprises an injection nozzle configured for injecting a cooling medium in the vaporized ammonia stream, in the superheated ammonia stream or in the superheated ammonia gas.

In one embodiment, the ammonia stream temperature control device comprises at least two injectors, each injector arranged for injecting a cooling medium in the vaporized ammonia stream at injection points being different from each other. This is particularly advantageous when the installation comprises more than one equipment to be protected against nitridation.

In one embodiment, at least one of the injectors is arranged for injecting a cooling medium in the vaporized ammonia stream upstream of the at least one ammonia stream superheater.

In one embodiment, at least one of the injectors is arranged for injecting a cooling medium in the vaporized ammonia stream upstream of the cracking unit, in particular in the superheated ammonia upstream of the cracking unit and downstream of the one or more ammonia stream superheaters.

In one embodiment, the ammonia stream temperature control device comprises: - at least one control valve configured to adjust a flow rate of the cooling medium injected in the vaporized ammonia stream.

In one embodiment, the ammonia stream temperature control device comprises: at least two control valves configured to adjust a flow rate of the cooling medium injected in the feedstock stream. Said control valves are in parallel to each other and fluidically arranged on the supply duct. Passing the cooling medium through said control valves arranged in parallel reduces the pressure drop and therefore limits a partial evaporation of the feedstock stream.

In one embodiment, the ammonia stream temperature control device comprises:
- a control unit for controlling said flow rate of the cooling medium via said control valve when the temperature of the temperature-controlled ammonia stream is above or below a predetermined temperature threshold.

In one embodiment, the ammonia stream temperature control device comprises:
- a temperature sensor configured to measure the temperature of the temperature-controlled ammonia stream, the temperature sensor being connected to the control unit to send the measured temperature to said control unit.

In one embodiment, the temperature sensor is positioned downstream of the ammonia stream superheater.

In one embodiment, the control unit is configured:
- to compare the measured temperature with said predetermined temperature threshold; and
- to increase the flow rate of the cooling medium, if the measured temperature is higher than the predetermined temperature threshold.

In one embodiment, the control unit is configured:
- to compare the measured temperature with a predetermined temperature threshold, and
- to decrease the flow rate of the cooling medium, if the measured temperature is lower than the predetermined temperature threshold.

This way, the overheating of an equipment downstream of the control unit, in particular the overheating of the ammonia stream superheater, is avoided, while keeping the temperature-controlled ammonia stream at an optimal temperature.

In one embodiment, the predetermined temperature threshold is comprised between 400 and 700 °C, preferably comprised between 550 and 650°C.

Advantageously, the control unit is configured to increase and/or decrease the flow rate of the cooling medium injected upstream and/or downstream of the ammonia stream superheater.

In one embodiment, the supply duct is branched off from the feed duct upstream or downstream of the feed pump. This arrangement allows to adjust a pressure of the cooling medium according to the pressure of the vaporized ammonia stream to be cooled.

In one embodiment, the gas conversion reactor, in particular a cracking reactor comprises at least a catalyst configured to perform the gas conversion.

In one embodiment, the installation comprises a hydrogen recovery unit, such as a pressure swing adsorption (PSA) unit and/or a partial condensation unit, arranged to recover hydrogen from the hydrogen product.

Further features, details and advantages of the invention will become more clearly apparent from reading the description given below by way of indication with reference to the drawings, in which:
[Fig. 1] is a schematic representation of the installation of the invention according to one example of the invention;
[Fig. 2] is a schematic representation of a part of the installation according to one example of the invention;

The features, variants, and different embodiments of the invention can be combined with each other in various combinations, provided they are not incompatible or mutually exclusive. In particular, one can envision variants of the invention that include only a selection of the features described hereinafter, isolated from other described features, if this selection of features is sufficient to confer a technical advantage and/or to differentiate the invention from the prior art.

In the following description, identical or functionally identical elements are designated by the same reference sign. For the sake of conciseness in the description, only the differences between the presented embodiments are described.

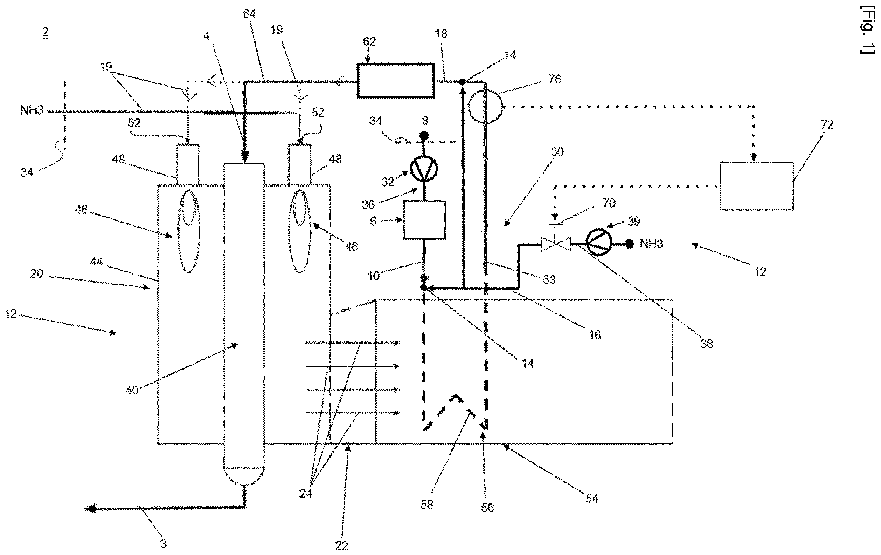

Referring to figure 1, an example of an installation 2 for producing a hydrogen product 3 from a feedstock stream 4 is represented. Said installation comprises:
- a vaporizer 6 configured to receive an ammonia stream 8 and to vaporize said ammonia stream 8 so as to obtain a vaporized ammonia stream 10;
- a gas conversion unit 12 for the conversion of said feedstock stream 4; and
- an ammonia stream temperature control device 12 comprising two injectors 14 arranged for injecting a cooling medium 16 in the vaporized ammonia stream 10 to obtain a temperature-controlled ammonia stream 18.

The installation 2 comprises a fired equipment 20 and a flue gas duct 22 arranged to discharge a flue gas stream 24 from the fired equipment 20. The flue gas duct 22 may be arranged as a flue gas tunnel.

The installation 2 comprises an ammonia circulation line 30 which connects the vaporizer 6 with:
- the gas conversion unit 12 to provide the temperature-controlled ammonia stream 18 to the gas conversion unit as said feedstock stream; and
- the fired equipment 20 to provide the temperature-controlled ammonia stream 18 as a fuel stream 19 to said fired equipment 20.

The injectors 14 are arranged for injecting said cooling medium in the ammonia circulation line 30.

The installation 2 comprises a feed pump 32 configured to supply the ammonia stream 8, in particular a liquid ammonia stream 8, to the vaporizer 6. The feed pump 32 allows to increase the pressure of the ammonia stream 8 from the battery limit 34 to a target process pressure. The feed pump 32 is arranged to be supplied by the liquid ammonia stream 8 from the battery limit 34.

The installation 2 comprises a feed duct 36 arranged to provide said ammonia stream 8. The feed pump 32 may be connected to the feed duct 36 to pump ammonia into the feed duct 36.

The ammonia stream temperature control device 12 comprises a supply duct 38, cold-insulated, and connected to the injectors 14 to supply a cooling medium 16 to the injectors 14.

The temperature control device 12 comprises a supply pump 39 connected to the supply duct 38 to provide the cooling medium 16 to the supply duct 38.

The supply duct 38 is configured to be cooled by forced convection, in particular by convection with cooled air.

The gas conversion unit 12 comprises a gas conversion reactor 40 configured for the conversion of said feedstock stream 4. For example, the gas conversion reactor 40 may be a cracking reactor 40 arranged for cracking ammonia as said feedstock. In another non-illustrated example, the gas conversion reactor may be a reformer arranged for the reforming of hydrocarbons as said feedstock.

The fired equipment 20 comprises a furnace 44 arranged in a thermal communication with the gas conversion reactor 40 to provide heat to the gas conversion reactor 40. The furnace 44 comprise a combustion zone 46 in which a combustion of a fuel stream is performed. The furnace 44 comprises burners 48 arranged to combust the fuel stream in the combustion zone in order to provide heat to the gas conversion unit, and thereby producing a flue gas. The flue gas duct is in particular connected to the furnace to discharge a flue gas stream from the combustion zone. Advantageously, the fuel stream 19 is provided in a liquid form, typically at a temperature around -33°C and particularly from the battery limit 34.

The burners 48 are each connected to a fuel stream inlet 52.

Referring to the example of figure 1, the installation 2 comprises:
- an ammonia stream superheater 54 arranged to superheat said temperature-controlled ammonia stream 18 so as to obtain a superheated ammonia stream 63.

The vaporizer may vaporize and superheat the ammonia stream 8, so as to obtain a superheated ammonia gas.

At least one of the injectors 14 may be arranged for injecting said cooling medium 16 into the superheated ammonia gas to obtain said temperature-controlled ammonia stream 18.

The ammonia stream superheater 54 comprises a heat exchanger 56 comprising a coil 58 configured to be heated by a heating medium.

The heat exchanger 56 of the ammonia stream superheater 54 is arranged in said flue gas duct 22.

The ammonia circulation line 30 comprises the ammonia stream superheater 54.

Said one ammonia stream superheater 54 forms a waste heat recovery system configured to recover heat from said flue gas stream 24.

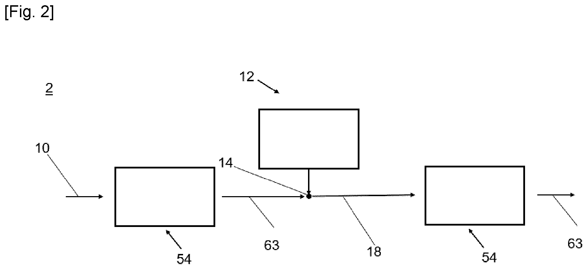

In an example illustrated in figure 2, the installation 2 comprises:
- at least two ammonia stream superheaters 54 arranged to superheat the vaporized ammonia stream 10; and
wherein the injector 14 of the ammonia stream temperature control device 12 is arranged for injecting a cooling medium 16 in the vaporized ammonia stream 10 upstream of one of the ammonia stream superheaters 54 and downstream of another of the ammonia stream superheaters 54.

In this example of figure 2, the installation 2 comprises the ammonia stream superheater 54 arranged to superheat the temperature-controlled ammonia stream 18, thereby obtaining a superheated ammonia stream 63.

As a result of the temperature of the vaporized ammonia stream being controlled, the heat exchanger of a superheater can be efficiently protected against overheating and damage thanks to the ammonia stream temperature control device 12.

Referring to figures 1 and 2, the installation 2 comprises a cracking unit 62 arranged to partially convert the temperature-controlled ammonia stream 18, or the superheated ammonia stream 63, in order to provide a partially converted ammonia stream 64 to the gas conversion unit 12 as the cracking reactor 40, and to the fired equipment 20.

The cracking reactor 40 comprises a catalyst configured to perform the gas conversion.

The ammonia circulation line 30 comprises the cracking unit 62.

The cracking unit 62 arranged downstream of the ammonia stream superheater.

The cracking unit 62 is an adiabatic cracking reactor.

In the embodiment wherein the ammonia circulation line 30 is connecting the vaporizer 6 with the fired equipment 20, the cracking unit 62 may be a fuel cracker (see for example the dashed lines on figure 1 linking the cracking unit with the burners).

The ammonia stream temperature control device 12 comprises two injectors 14, each injector 14 arranged for injecting a cooling medium 16 in the vaporized ammonia stream 10 at injection points being different from each other. This is particularly advantageous when the installation 2 comprises more than one equipment to be protected against nitridation.

One of the injectors 14 is arranged for injecting a cooling medium 16 in the vaporized ammonia stream 10 upstream of the ammonia stream superheater 54.

Another one of the injectors 14 is arranged for injecting a cooling medium 16 in the superheated ammonia stream 63 upstream of the cracking unit 62 and downstream of the ammonia stream superheater 54.

The injectors 14 each comprises an injection nozzle configured for injecting a cooling medium 16 in the vaporized ammonia stream 10 or in the superheated ammonia stream 63.

The ammonia stream temperature control device 12 comprises: - one control valve 70 configured to adjust a flow rate of the cooling medium 16 injected in the vaporized ammonia stream 10.

The ammonia stream temperature control device 12 comprises:
- a control unit 72 for controlling said flow rate of the cooling medium 16 via said control valve 70 when the temperature of the temperature-controlled ammonia stream 18 is above or below a predetermined temperature threshold.

The control unit 72 is configured to increase and/or decrease the flow rate of the cooling medium 16 injected upstream and downstream of the ammonia stream superheater 54.

The ammonia stream temperature control device 12 comprises:
- a temperature sensor 76, positioned downstream of the ammonia stream superheater 54, and configured to measure the temperature of the temperature-controlled ammonia stream 18, the temperature sensor 76 being connected to the control unit 72 to send the measured temperature to said control unit 72.

The control unit 72 is configured:
- to compare the measured temperature with said predetermined temperature threshold; and
- to increase the flow rate of the cooling medium 16, if the measured temperature is higher than the predetermined temperature threshold; and
- to decrease the flow rate of the cooling medium, if the measured temperature is lower than the predetermined temperature threshold.

This way, the overheating of an equipment downstream of the control unit 72, in particular the overheating of the ammonia stream superheater 54, is avoided, while keeping the temperature-controlled ammonia stream 18 at an optimal temperature.

The predetermined temperature threshold is comprised between 400 and 700 °C, preferably comprised between 550 and 650°C.

**Table 1: A few examples of the influence of injecting liquid ammonia with 0.5 wt% water at -32°C to a hot stream at 31 bars with the same composition.**

| Temperature upstream injection nozzle | Fraction of total mass flow injected via liquid ammonia | Resulting temperature downstream injection nozzle |
|---|---|---|
| 550 °C | 0% | 550°C |
| 550 °C | 1% | 541°C |
| 550 °C | 2% | 532°C |
| 550 °C | 5% | 503°C |
| 550 °C | 10% | 456°C |
| 550 °C | 20% | 357°C |

The forementioned table 1 is explained in relation with the first injector 14 arranged for injecting a cooling medium 16 in the vaporized ammonia stream upstream of the ammonia stream superheater 54.

This table 1 illustrates that when the more liquid ammonia as the cooling medium is injected in the vaporized ammonia stream 10, the more vaporized ammonia stream 10 is effectively cooled down. For example, when 20% of the total mass flow is injected as liquid ammonia in the vaporized ammonia stream 10, the temperature of the vaporized ammonia stream 10, initially at 550°C, can be cooled down to 357°C. This represents about 35% of decrease in the temperature for 20% of the fraction of total mass flow.

## Claims

1. Process for producing a hydrogen product (3) from a feedstock stream (4), said process comprising the following steps:
- providing an ammonia stream (8);
- sending the ammonia stream (8) to a vaporizer (6) configured to receive said ammonia stream (8) and to vaporize said ammonia stream (8) so as to obtain a vaporized ammonia stream (10); and
- controlling the temperature of the vaporized ammonia stream (10) by injecting a cooling medium (16) into the vaporized ammonia stream (10) thereby obtaining a temperature-controlled ammonia stream (18).

2. Process according to claim 1, comprising:
- superheating the vaporized ammonia stream (10) so as to obtain the superheated ammonia gas; and
- controlling the temperature of the vaporized ammonia stream (10) by injecting said cooling medium (16) into the superheated ammonia gas, thereby obtaining the temperature-controlled ammonia stream (18).

3. Process according to claim 1 or 2, further comprising the following steps of:
- directing the temperature-controlled ammonia stream (18) as said feedstock stream (4) to a gas conversion unit (12) to perform a gas conversion for producing said hydrogen product (3), and/or;
- directing the temperature-controlled ammonia stream (18) as a fuel stream (19) to a fired equipment (48); and performing a combustion of the fuel stream (19) with the fired equipment (48) to bring a heat input to the process, thereby producing a flue gas stream (24).

4. Process according to the preceding claim, wherein:
- the feedstock stream (4) comprises ammonia;
- the hydrogen product (3) comprises a cracked gas stream; and
the gas conversion comprises a cracking reaction of ammonia and produces a cracked gas stream as said hydrogen product (3).

5. Process according to any one of the preceding claims, wherein the cooling medium (16) comprises ammonia, in particular liquid ammonia.

6. Process according to any one of the preceding claims, comprising: superheating the temperature-controlled ammonia stream (18), thereby obtaining a superheated ammonia stream (63).

7. Process according to any one of the preceding claims, in combination with claims 3, comprising: superheating the temperature-controlled ammonia stream (18) by recovering waste heat from said flue gas stream (24).

8. Process according to any one of the preceding claims, in combination with claim 3, comprising: converting partially the temperature-controlled ammonia stream (18), or the superheated ammonia stream (63) in order to provide a partially converted ammonia stream (64) to the gas conversion unit (12) as a gas conversion reactor (40), in particular a cracking reactor (40), and/or to the fired equipment (20).

9. Process according to any one of the preceding claims, comprising the following steps of:
- measuring the temperature of the temperature-controlled ammonia stream (18);
- comparing said measured temperature with a predetermined temperature threshold; and
- increasing the flow rate of the cooling medium (16) if the measured temperature is higher than the predetermined temperature threshold.

10. Installation (2) for producing a hydrogen product (3) from a feedstock stream (4), said installation (2) comprising:
- a vaporizer (6) configured to receive an ammonia stream (8) and to vaporize said ammonia stream (8) so as to obtain a vaporized ammonia stream (10);
- a gas conversion unit (12) for the conversion of said feedstock stream (4); and
- an ammonia stream temperature control device (12) comprising at least one injector (14) arranged for injecting a cooling medium (18) in the vaporized ammonia stream (10) to obtain a temperature-controlled ammonia stream (18).

11. Installation (2) according to claim 10, comprising an ammonia circulation line (30) which connects the vaporizer (6) with:
- the gas conversion unit (12) to provide the temperature-controlled ammonia stream (18) to the gas conversion unit (12) as said feedstock stream (4); and/or
- a fired equipment (20) to provide the temperature-controlled ammonia stream (18) as a fuel stream (19) to said fired equipment (20).

12. Installation (2) according to claim 10 or 11, comprising:
- an ammonia vapor superheater arranged to superheat said vaporized ammonia stream (10) so as to obtain a superheated ammonia gas; and
the injector (14) is arranged for injecting said cooling medium (16) into the superheated ammonia gas to obtain said temperature-controlled ammonia stream (18).

13. Installation (2) according to any one of claims 10 to 12, comprising:
at least one ammonia stream superheater (54) arranged to superheat the temperature-controlled ammonia stream (18), thereby obtaining a superheated ammonia stream (63).

14. Installation (2) according to the preceding claim, comprising a flue gas duct (22) arranged to discharge a flue gas stream (24) from the fired equipment (20), wherein the ammonia stream superheater (54) comprises a heat exchanger (56) comprising at least one coil (58) and/or at least one tube configured to be heated by a heating medium; and
the heat exchanger (56) of the at least one ammonia stream superheater (54) is arranged in said flue gas duct (22).

15. Installation (2) according to one of claims 10 to 14, comprising:
- at least one cracking unit (62) arranged to partially convert the temperature-controlled ammonia stream (18), or the superheated ammonia stream (63), in order to provide a partially converted ammonia stream (64) to the gas conversion unit (12) and/or to the fired equipment (20).
